# EUROPÄISCHE PATENTSCHRIFT

(11) **EP 2 791 060 B1**
(45) Veröffentlichungstag und Bekanntmachung des Hinweises auf die Patenterteilung: **23.01.2019**
(21) Anmeldenummer: 12815612.2
(22) Anmeldetag: 12.12.2012
(51) Int. Cl.: C01G 49/06, C01G 49/10, C01G 53/09, C23G 1/36, C01B 9/02, C01B 7/03, C01B 7/07, C22B 3/10, C22B 3/44

(54) **VERFAHREN ZUR AUFKONZENTRIERUNG UND ABTRENNUNG VON METALLCHLORIDEN IN/AUS EINER EISEN(III)CHLORIDHALTIGEN SALZSAUREN LÖSUNG**
METHOD FOR CONCENTRATING METAL CHLORIDES IN AND SEPARATING SAME FROM AN IRON(III) CHLORIDE-CONTAINING HYDROCHLORIC ACID SOLUTION
PROCÉDÉ POUR CONCENTRER ET SÉPARER DES CHLORURES MÉTALLIQUES DANS/DEPUIS UNE SOLUTION CHLORHYDRIQUE CONTENANT DU CHLORURE DE FER(III)

(30) Priorität: 16.12.2011 AT 18382011; 25.05.2012 AT 502052012
(43) Veröffentlichungstag der Anmeldung: 22.10.2014
(73) Patentinhaber: SMS Siemag Process Technologies GmbH, 1030 Wien (AT)
(72) Erfinder: WEISSENBAECK, Herbert, A-1010 Wien (AT); VOGL, Dieter, A-3424 Wolfpassing (AT)
(74) Vertreter: Sonn & Partner Patentanwälte
(86) Internationale Anmeldenummer: PCT/AT2012/050195
(87) Internationale Veröffentlichungsnummer: WO 2013/086555

(56) Entgegenhaltungen:
- EP-A1- 1 900 831
- WO-A1-02/08477
- AU-A1- 200 143 750
- FR-A1- 2 201 345
- US-A- 4 042 664

## Beschreibung

Die vorliegende Erfindung betrifft ein Verfahren zur Aufkonzentrierung und Abtrennung von Metallchloriden in/aus einer eisen(III)chloridhaltigen salzsauren Lösung.

Eisenhaltige salzsaure Lösungen entstehen bei verschiedensten Prozessen, unter anderem beim Beizen in der Stahlindustrie, wo der Zunder mittels chemischer Reaktion mit Chlorwasserstoffsäure entfernt wird. Eisenhaltige salzsaure Lösungen entstehen aber auch in der Nichteisenindustrie, wo verschiedenste Erze in Chlorwasserstoffsäure gelöst und in einem nachgeschalteten hydrometallurgischen Prozess die Nichteisenmetalle gewonnen werden. Da in den Erzen praktisch immer Eisen vorhanden ist, fallen auch hier eisenhaltige salzsaure Lösungen an. Für die Abtrennung von Metallchloriden aus eisen(III)chloridhaltigen Lösungen gibt es unterschiedlichste Hintergründe und Notwendigkeiten.

Aus Gründen der Wirtschaftlichkeit ist es ein Ziel von Betreibern von Produktionsanlagen, in denen Eisenchloride als Abfallprodukt anfallen, die Chlorwasserstoffsäure in einem Regenerationsverfahren zurückzugewinnen und somit einen geschlossenen Chloridkreislauf am Standort der Produktionsanlage herzustellen.

In industriellen Prozessen liegen die anfallenden eisenhaltigen salzsauren Lösungen im Normalfall nicht in reiner Form vor. Bei eisenhaltigen salzsauren Lösungen aus Beizprozessen in der Stahlindustrie ist die besagte salzsaure Lösung mit den im Stahl vorhandenen Legierungselementen z.B. Mn, Zn, Ni usw. verunreinigt. Hier ist es Ziel des Betreibers, die besagten Legierungselemente aus dem geschlossenen Chloridkreislauf zwischen der Produktionsanlage und dem Regenerationsverfahren auszuschleusen, um die Akkumulation der Verunreinigung zu verhindern. In hydrometallurgischen Prozessen ist die Aufgabestellung etwas anders, dort handelt es sich bei den in der eisenhaltigen salzsauren Lösung in geringen Konzentrationen enthaltenen Verunreinigungen um Wertstoffe, die zu extrahieren sind.

Bei den gängigen Rückgewinnungsverfahren für die Rückgewinnung von Chlorwasserstoff aus eisenhaltigen salzsauren Lösungen unterscheidet man zwischen pyrohydrolytischen und hydrothermalen Verfahren.

Die beiden bekannten pyrohydrolytischen Verfahren sind einerseits das Ruthnerverfahren, bekannt auch als Sprühröstverfahren, und das Lurgiverfahren, bekannt auch als Wirbelschichtverfahren. Im Grunde arbeiten beide Verfahren nach dem gleichen Prinzip, wobei sie sich hauptsächlich in der Bauart des Rösters unterscheiden. Die anfallende Eisenchloridlösung wird direkt in einen mit Brennstoff befeuerten Ofen eingedüst, das in der Eisenchloridlösung vorhanden Wasser verdampft und das Eisenchlorid reagiert mit Wasser und - im Fall von Eisen(II)chlorid auch mit Sauerstoff - zu Eisenoxid in Form von Hämatit, der kontinuierlich aus dem Reaktor ausgetragen wird, und Chlorwasserstoff, das gasförmig mit dem Wasserdampf und dem aus der Verbrennung stammenden Ausbrand aus dem Reaktor ausgetragen wird. Bei einem Sprühröster wird die Eisenchloridlösung von oben in den Reaktor fein versprüht, das sich bildende Eisenoxidpulver fällt nach unten und wird dort abgezogen. Typischerweise wird die Austrittstemperatur des Röstgases auf etwa 400°C eingestellt.

Beim Lurgiverfahren wird als Röstofen ein Wirbelschichtofen eingesetzt. Hierbei wird als Fluidisierungsmedium der Ausbrand der für den Prozess benötigen Verbrennung verwendet. Als Bettmaterial dient das produzierte Eisenoxidgranulat. Die Eisenchloridlösung wird mittels Lanzen drucklos auf die Wirbelschicht aufgetragen. Dabei wird das Eisenoxidgranulat mit der Eisenchloridlösung benetzt und die Eisenchloridlösung wird abgeröstet, es entstehen Eisenoxid in Form von Hämatit und Chlorwasserstoffsäure. Aufgrund der hohen Temperatur von 850°C wird die neu gebildete Eisenoxidschicht mit dem Grundmaterial versintert und das Eisenoxidgranulat wächst auf. Aus dem Reaktor wird kontinuierlich Eisenoxidgranulat entfernt um die Betthöhe konstant zu halten. Ähnlich dem Ruthnerverfahren wird der gebildete Chlorwasserstoff mit dem Wasserdampf und dem Ausbrand der Verbrennung gasförmig aus dem Reaktor abgezogen.

Die Röstgase werden bei beiden Verfahren zunächst in einem Venturiverdampfer abgekühlt, wobei als Kühlmedium die Eisenchloridlösung eingesetzt und dabei durch Verdampfung aufkonzentriert wird. Die resultierende aufkonzentrierte Eisenchloridlösung wird in den Röster eingedüst.

Der Chlorwasserstoff wird aus dem abgekühlten Röstgas in einer mehrstufigen Gaswäsche ausgewaschen. Dabei wird Chlorwasserstoffsäure erzeugt, welche wiederum in den ursprünglichen Produktionsprozess eingesetzt werden kann.

Bei den pyrohydrolytischen Regenerationsverfahren findet die Hydrolyse nicht in der wässrigen Phase statt. Die Säure wird in den Reaktor eingedüst, das Wasser verdampft und die in der eisenhaltigen salzsauren Lösung enthaltenen Metallchloride kristallisieren aus und werden geröstet. Das bedeutet, dass die Metallchloride mit dem Wasser in der Ofenatmosphäre zu Metalloxiden reagieren und Chlorwasserstoff freisetzen. Ein Vorteil bei diesen Verfahren ist, dass der Großteil der in der eisenhaltigen salzsauren Lösung vorhanden Verunreinigungen unter diesen Bedingungen abgeröstet und damit aus dem geschlossen Chloridkreislauf ausgeschleust wird. Selbst Elemente, die nicht abgeröstet werden können, wie z.B. K, Ca, Na, werden als Chloridverunreinigungen im Oxid ausgeschleust.

Metallchloride mit niedriger Sublimationstemperatur, wie z.B. ZnCl₂ oder FeCl₃, eignen sich nicht für dieses Verfahren, da diese Metallchloride als Dampf aus dem Reaktor abgezogen werden und in kühleren Bereichen der Anlage auskondensieren und feinste Partikel bilden, die zu Ablagerungen und Verstopfung im Abgaszug führen.

In der AT 315 603 B (Verfahren zum Regenerieren zinkhaltiger salzsaurer Eisenbeizlösungen) wird ein Verfahren beschreiben, bei dem eine mit Zinkchlorid verunreinigte eisenhaltige salzsaure Lösung, wie eine Beizlösung aus Galvanikprozessen, durch Zusatz von Schwefelsäure in einem Sprühröster aufgearbeitet wird, wobei das Zink im produzierten Eisenoxid als Zinksulfat vorliegt.

Ein weiteres Verfahren zur Aufbereitung von Eisenchloridlösungen stellt die hydrothermale Regeneration dar, wo Hämatit direkt aus der Eisen(III)chloridlösung ausgefällt wird. Das bedeutet, dass gelöstes Eisen(III)chlorid mit Wasser zu Hämatit und Chlorwasserstoff reagiert. Der Chlorwasserstoff wird durch Verdampfung aus der Lösung getrieben. Dadurch, dass der Chlorwasserstoff kontinuierlich aus dem Reaktionsgleichgewicht entfernt wird, wird die Hydrolysereaktion von Eisen(III)chlorid angetrieben.

In der US 3 682 592 B wird im sogenannten PORI Prozess die Hydrolyse von Eisen(III)chlorid beschrieben. Dabei wird eine aus Stahlbeizen stammende Eisen(II)chloridlösung in einem ersten Verfahrensschritt aufkonzentriert und im Anschluss mittels Sauerstoff zu einer Eisen(III)chloridlösung oxidiert. Die für die Verdampfung im Hydrolysereaktor benötigte Energie wird durch den Ausbrand einer Verbrennung zur Verfügung gestellt. Der Energieeintrag in den Reaktor erfolgt durch direkten Kontakt der Eisen(III)chloridlösung mit dem heißen Ausbrand. In einem Gaswäscher wird der Chlorwasserstoff aus dem Abgas ausgewaschen und die Chlorwasserstoffstoffsäure zurückgewonnen.

Die JP 2006-137118 beschreibt ein Verfahren zur Regenerierung von Eisenchloridlösungen nach dem hydrothermalen Prinzip, bei dem die Hydrolyse bei einer Temperatur von 120°C bis 150°C und mit Unterdruck zum Herabsetzen der Siedetemperatur der Eisen(III)chloridlösung durchgeführt wird. Im Gegensatz zum PORI-Prozess wird die für die Verdampfung benötigte Energie indirekt über Wärmetauscher in den Hydrolysereaktor eingebracht. Versuche haben jedoch gezeigt, dass das aus der Lösung gefällte Eisenoxid nicht die gewünschte Qualität aufweist. Durch Anlegen eines Unterdruckes zur Herabsenkung der Siedetemperatur der Eisen(III)chloridlösung im Hydrolysereaktor weist die besagte Eisen(III)chloridlösung aufgrund des Dampf-Flüssigkeitsgleichgewichtes eine hohe Eisen(III)chloridkonzentration auf, sodass aufgrund des Wassermangels anstatt von Hämatit das unvorteilhafte Eisenoxychlorid gebildet wird.

Im Verfahren gemäß der WO 2009/153321 wird der Hydrolysereaktor bei Atmosphärendruck betrieben, die Energiezufuhr erfolgt indirekt durch einen Wärmetauscher. Der Hydrolyse sind zwei weitere Verfahrensschritte vorgeschaltet. Zunächst wird die Eisenchloridlösung aufkonzentriert, wobei die hierfür benötigte Energie durch Kondensationsenergie der Dämpfe aus dem Hydrolysereaktor erfolgt. Durch die geschickte Nutzung interner Prozesswärme kann der Energieverbrauch der hydrothermalen Regeneration im Vergleich zu den pyrohydrolytischen Verfahren um die Hälfte gesenkt werden.

Die in der eisenhaltigen salzsauren Lösung enthaltenen Verunreinigungen z.B. Mn, Zn, Ca, K, Mg, Na usw. sind in der Regel nicht in der wässrigen Lösung hydrolysierbar, was dazu führt, dass die besagten Elemente im Hydrolysereaktor aufkonzentriert werden. Mit zunehmender Konzentration der nicht hydrolysierbaren Metalle verändert sich aber auch das Dampf-Flüssigkeitsgleichgewicht, wodurch die Konzentration der nicht hydrolysierbaren Metalle bis zu einem gewissen Grad akzeptabel ist.

Im Regelfall werden die in der eisenhaltigen salzsauren Lösung aus den Stahlbeizen enthaltenen Legierungselemente nicht wirtschaftlich verwertet. Dadurch ergibt sich ein Nachteil gegenüber den pyrohydrolytischen Regenerationsverfahren, wo die besagten Legierungselemente aus dem geschlossenen Chloridkreislauf ausgeschleust und verwertet werden können. Derzeit wird ein Teil der Hydrolyselösung kontinuierlich verworfen, um die Konzentration der nicht hydrolysierbaren Metalle einstellen zu können. Dabei wird auch verwertbares Eisen(III)chlorid verworfen, wodurch der Rückgewinnungsgrad von Chlorwasserstoff reduziert wird. Je größer der Aufkonzentrierungsgrad der nicht hydrolysierbaren Metalle in der eisenhaltigen salzsauren Lösung im Hydrolysereaktor ist, umso geringer ist der Anteil der zu verwerfenden eisenhaltigen salzsauren Lösung. Trotz geringeren Rückgewinnungsgrad von Chlorwasserstoff im Vergleich zu den pyrohydrolytischen Regenerationsverfahren ist die hydrothermale Regeneration aufgrund der Energieeffizienz wirtschaftlich.

In hydrometallurgischen Verfahren ist es Ziel, die in der eisenhaltigen salzsauren Lösung vorhandenen Metallchloride als Wertstoff, z.B.: Li, Be, Al, Sc, Ti, V, Cr, Mn, Co, Ni, Cu, Zn, Ga, Ge, As, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, Fr, Ra, Ac, Th, Pa, U, Np, Pu zu gewinnen. Dabei kann durch die Hydrolyse von Eisen(III)chlorid in der wässrigen Lösung das gelöste Eisen als Eisenoxid, vorzugsweise Hämatit, aus der wässrigen Lösung gefällt werden, während nicht hydrolysierbare Metalle als Chloride in der wässrigen Lösung gelöst bleiben EP 1 900 831 A1 bescheibt ein Verfahren zur Aufkonzentrierung und Abtrennung von Metallchloriden in/aus einer eisen(III)chloridhaltigen salzsauren Lösung. Dabei wird zunächst das vorhandene Eisen als Hämatit auf der Lösung gefällt und abfiltriert. Nach dem Entfernen des Eisens werden die in der Lösung verbliebenen nicht hydrolysierbaren Metallchloride aus dem Filtrat entfernt, beispielsweise durch Fällung durch die Zugabe von Chlor und Wasserstoffperoxid.

Bei der vorliegenden Erfindung handelt es sich um ein Verfahren zur Aufkonzentrierung und Abscheidung von Metallchloriden in/aus einer eisen(III)chloridhaltigen salzsauren Lösung, wobei Eisen als Hämatit mittels Hydrolyse bei Temperaturen von 150° bis 300°C und bei einem Druck von -0,8 bar bis 20 bar aus der Lösung gefällt und in einer Filtrationsvorrichtung abfiltriert wird, wobei aus zumindest einem Teil des dabei gewonnenen Filtrats nicht hydrolisierbare Metallchloride durch Fällung und Filtration entfernt werden, dieses salzsaure Filtrat in einen Vorverdampfer geleitet wird, wo ein Großteil des in der Lösung enthaltenen Chlorwasserstoffes unter Energiezufuhr ausgetrieben und als Regenerat zurückgewonnen wird, wonach die aufkonzentrierte Lösung aus dem Vorverdampfer in den Hydrolysereaktor gepumpt wird, dadurch gekennzeichnet, dass ein Teil des aus der Hydrolyse gewonnenen Regenerates entnommen und in einem Aufkonzentrierungsschritt aus dem Regenerat reiner Chlorwasserstoff mit einer Konzentration von mindestens 70 %wt gewonnen wird, der für die Fällung der aufkonzentrierten nicht hydrolisierbaren Metallchloride aus dem salzsauren Filtrat durch Erhöhung der Konzentration an freiem Chlorwasserstoff in der Lösung verwendet wird. Die Konzentration der nicht hydrolysierbaren Metallchloride in der aufkonzentrierten eisenhaltigen salzsauren Lösung beträgt max. 30%wt, vorzugsweise max. 20%wt, wobei die Konzentration des Eisen(III)chlorides in der besagten Lösung 30 bis 80%wt, vorzugsweise 40%wt bis 75%wt beträgt.

Das erfindungsgemäße Verfahren kann kontinuierlich oder batchweise erfolgen, im Folgenden wird der Einfachheit halber auf einen kontinuierlichen Verfahrensablauf Bezug genommen. Der Fachmann kann dieses kontinuierliche Verfahren mit geeigneten Veränderungen ohne weiteres auch batchweise durchführen. Eine mit Metallchloriden versetzte eisenhaltige salzsaure Lösung, wobei das gelöste Eisen zum Großteil dreiwertig vorliegt, wird in einen Hydrolysereaktor geleitet. Dort findet die Hydrolysereaktion statt, bei der das in der eisenhaltigen salzsauren Lösung vorhandene Eisen(III)chlorid mit Wasser zu Chlorwasserstoff und Hämatit reagiert. Die besagte Hydrolysereaktion ist eine Gleichgewichtsreaktion und um die Reaktion am Laufen zu halten, muss der Chlorwasserstoff kontinuierlich aus der Lösung ausgetrieben werden. Das Dampf-Flüssigkeitsgleichgewicht wird durch die Präsenz der nicht hydrolysierbaren Metallchloride verändert (siehe Beispiel 1 und 2), und daher sind die Betriebsbedingungen im Hydrolysereaktor unter neuen Gesichtspunkten zu betrachten. Der Hydrolysereaktor wird dabei bei Temperaturen von 150° bis 300°C, vorzugsweise bei Temperaturen von 160°C bis 200°C, bei einem Druck von -0,8 bar bis 20 bar, vorzugsweise bei -0,5 bis 10 bar betrieben. Die Chlorwasserstoffkonzentration im Hydrolysedampf liegt bei 10 bis 40 %wt, vorzugsweise 15 bis 35wt%.

Durch Zufuhr von thermischer Energie wird im Betrieb Wasser und Chlorwasserstoff verdampft. Ein Teil der Lösung wird nun aus dem Hydrolysereaktor entnommen und der aus der Lösung gefällte Hämatit wird in einer Filtrationsvorrichtung abfiltriert. In einem weiteren Verfahrensschritt werden die nunmehr aufkonzentrierten nicht hydrolysierbaren Metallchloride aus zumindest einem Teil des eisenhaltigen salzsauren Filtrates entfernt. Dabei besteht die Möglichkeit, dass die besagte eisenhaltige salzsaure Lösung vor dem weiteren Verfahrensschritt gekühlt wird und/oder mit Wasser verdünnt wird, um unkontrollierte Kristallisation von Eisen(III)chlorid zu verhindern. In einer erfindungsgemäßen Variante kann bereits vor der Filtration von gefälltem Hämatit die besagte eisenhaltige salzsaure Lösung gekühlt und/oder mit Wasser verdünnt werden. Der nicht weiterbehandelte Teil des besagten Filtrates wird in den Hydrolysereaktor (oder in einen anderen im Prozess vorangegangen Verfahrensschritt) zurückgepumpt.

Gemäß einer nicht-erfindungsgemäßen Ausführungsform werden zur Abtrennung der aufkonzentrierten nicht hydrolysierbaren Metallchloride aus der abfiltrierten eisenhaltigen salzsauren Lösung aus dem Reaktor die einzelnen Metallchloride selektiv mittels Lösungsmittelextraktion gewonnen. Die verbleibende eisenhaltige salzsaure Lösung wird in den Hydrolysereaktor, oder in einen anderen im Prozess vorangegangen Verfahrensschritt, zurückgepumpt. In einem Stripprozess werden die besagten Metallchloride dann aus der organischen Phase rückextrahiert, beispielsweise in eine wässrige Phase. Die organische Phase wird rückgewonnen und zur weiteren Lösungsmittelextraktion eingesetzt.

Durch dieses Verfahren ist es nun möglich, bei der hydrothermalen Säureregeneration den Rückgewinnungsgrad von Chlorwasserstoff zu erhöhen, da keine eisenhaltige salzsaure Lösung verworfen wird. Ein weiterer entscheidender Vorteil diese Verfahrens ist, dass die Konzentration von nicht hydrolysierbaren Metallchloriden in der eisenhaltigen salzsauren Lösung unter Umständen äußerst gering ist und es durch die vorliegende Erfindung überhaupt erst möglich ist, diese besagten Metallchloride in der eisenhaltigen salzsauren Lösung zu konzentrieren und mittels Lösungsmittelextraktion zu gewinnen.

Dabei ist es weiters günstig, wenn für jedes aus der eisenhaltigen salzsauren Lösung zu extrahierende Metallchlorid jeweils auf das besagte Metallchlorid zugeschnittene Lösungsmittelextraktionsverfahren in Serie durchgeführt wird.

Gemäß einer weiteren nicht-erfindungsgemäßen Ausführungsform wird das im eisenhaltigen salzsauren Filtrat enthaltene Eisen(III)chlorid mittels Lösungsmittelextraktion direkt extrahiert und aus der nunmehr resultierenden eisenfreien Lösung werden dann die einzelnen nicht hydrolysierbaren Metallchloride mittels Lösungsmittelextraktion selektiv gewonnen.

In einer weiteren alternativen nicht-erfindungsgemäßen Ausführungsform werden zur Abtrennung der aufkonzentrierten nicht hydrolysierbaren Metallchloride aus der abfiltrierten eisenhaltigen salzsauren Lösung aus dem Reaktor die einzelnen Metallchloride selektiv mittels lonentauscher gewonnen.

Bei dem erfindungsgemäßen Verfahren werden die aufkonzentrierten nicht hydrolysierbaren Metallchloride aus der eisenhaltigen salzsauren Lösung durch Erhöhung der Konzentration an freiem Chlorwasserstoff in der Lösung ausgefällt. Während die Löslichkeit von Eisen(III)chlorid in wässriger Lösung bei zunehmender Konzentration von freiem Chlorwasserstoff kaum beeinflusst wird, nimmt die Löslichkeit der nicht hydrolysierbaren Metallchloride, wie z.B. Ni oder Zn, ab. Das auf diesen Weg ausgefällte Metallchlorid wird filtriert und gegebenenfalls mit konzentrierter Chlorwasserstoffsäure gewaschen, das gewonnene Filtrat sowie die Waschflüssigkeit kann in den Hydrolysereaktor oder in einen anderen vorangegangen Prozessschritt zurückgeleiten werden.

Besonders von Vorteil hat sich bei der erfindungsgemäßen Verfahrensvariante, bei der nicht hydrolisierbare Metallchloride durch Erhöhung der Konzentration der freien Chlorwasserstoffsäure in der eisenhaltigen salzsauren Lösung kristallisiert werden, die Präsenz von Eisen(III)chlorid in der besagten Lösung erwiesen. Hohe Konzentrationen von Eisen(III)chlorid in der eisenhaltigen salzsauren Lösung reduziert die Löslichkeit der nicht hydrolisierbaren Metallchloride in Abhängigkeit der freien Chlorwasserstoffsäure verglichen zum reinen System Metallchlorid-Wasser-Chlorwasserstoff (siehe Beispiel 5).

Das bedeutet, dass eine wesentlich geringere Konzentration von freier Chlorwasserstoffsäure für die besagte erfindungsgemäße Verfahrensvariante benötigt wird, wodurch einerseits das Verfahren zur Kristallisation von Metallchloriden durch Erhöhung von Chlorwasserstoff erst ermöglicht wird bzw. andererseits die Aufbereitung von reiner Chlorwasserstoffsäure reduziert wird, respektive der Energieverbauch des gesamten Prozesses reduziert wird.

Die erfindungsgemäße Kristallisation wird bei Temperaturen von 10 bis 200°C, vorzugweise zwischen 20 und 150°C und einem Druck von -0,8 bis 30 bar, vorzugsweisen -0,5 bis 20 bar betrieben und die eisenhaltige salzsaure Lösung enthält 10 bis 70%wt, vorzugsweise 20 bis 60%wt, Eisen(III)chlorid. Die Konzentration des freien Chlorwasserstoffs in der besagten Lösung wird auf max. 50%wt, vorzugsweise max. 40%wt erhöht.

Es ist unter anderem sinnvoll, für die Abtrennung von nicht hydrolysierbaren Metallchloriden mittels eines Kristallisationsprozesses aus einer salzsauren Lösung die besagte Lösung mit Eisen(III)chlorid zu versetzen, um Kristallisation durch Erhöhung der freien Chlorwasserstoffsäure entsprechend der erfindungsgemäßen Verfahrensvariante zu ermöglichen. Weiters kann bei eisenhaltigen salzsauren Lösungen, bei denen das Eisen zweiwertig vorliegt, das besagte zweiwertige Eisenchlorid durch Oxidation in dreiwertiges Eisenchlorid im Prozess übergeführt werden, um die Hydrolyse von Eisenchlorid zu Hämatit zu ermöglichen.

Ein wichtiger Punkt bei dem erfindungsgemäßen Verfahrens ist der für die Kristallisation der Metallchloride benötigte Chlorwasserstoff. Hierfür wird ein Teil des aus der Hydrolyse gewonnen Regenerates entnommen und in einem Aufkonzentrierungsschritt wird aus dem Regenerat reiner Chlorwasserstoff, mit einer Konzentration von mindestens 70%, vorzugsweise 80%wt, gewonnen, der für die Kristallisation eingesetzt wird. Für den Ausgleich des Wasserhaushaltes wird das im Aufkonzentrierungsschritt vom Chlorwasserstoff abgetrennte Wasser in den Hydrolysereaktor zurückgeführt. Damit ergibt sich innerhalb des Prozesses ein Chloridkreislauf von Hydrolysereaktor über Aufkonzentrierungsschritt zur Kristallisation und über Filtrat zurück zum Hydrolysereaktor.

Für den Aufkonzentrierungsschritt, also der Produktion von aufbereiteten Chlorwasserstoff mit einer Reinheit von min. 70%, vorzugsweise min 80%, gibt es verschiedene Verfahren. Zum einen kann der aufbereitete Chlorwasserstoff mit einer Reinheit von min 70%, vorzugsweise min. 80%, über eine relativ energieintensive Druckwechselrektifikation produziert werden. Eine weitere Möglichkeit besteht darin, dass Chlorwasserstoffsäure mit hochkonzentrierter Schwefelsäure in Kontakt gebracht wird. Da Schwefelsäure stark hygroskopisch ist, wird das in der Chlorwasserstoffsäure bzw. im Regenerat enthaltene Wasser in der Schwefelsäure gebunden, während reiner Chlorwasserstoff gasförmig abgezogen werden kann. Zur Effizienzsteigerung kann das Verfahren mehrstufig im Gegenstromprinzip durchgeführt werden. Die verdünnte Schwefelsäure kann in einer Rektifikationskolonne regeneriert werden.

Der wesentliche Vorteil des letztgenannten Verfahrens zur Produktion von Chlorwasserstoff gegenüber der direkten Druckwechselrektifikation von Chlorwasserstoff ist jener, das bei der Rektifikation von Schwefelsäure kein azeotroper Punkt übersprungen werden muss, da der azeotrope Punkt bei Schwefelsäure bei 96% liegt. Das bietet sowohl beim apparativen Aufwand als auch beim Energieverbrauch Vorteile. Aber auch Schleppmitteldestillation, bei der andere Metallchloride wie z.B. CaCl₂ eingesetzt werden, ist an dieser Stelle möglich.

Eine weitere Möglichkeit der Aufkonzentrierung bietet die Membrandestillation, die sowohl direkt mit reiner Chlorwasserstoffsäure als auch über den Umweg mit der Schwefelsäure bzw. mit anderen Metallchloriden, z.B. CaCl₂, als Schleppmittel eingesetzt werden kann.

Die aus der Metallchloridfiltration stammende salzsaure Lösung wird in einen Vorverdampfer geleitet, wo ein Großteil des in der Lösung enthaltenen Chlorwasserstoffes unter Energiezufuhr ausgetrieben und als Regenerat zurückgewonnen wird. Im Anschluss wird die aufkonzentrierte Lösung aus dem Vorverdampfer in den Hydrolysereaktor gepumpt, um den Kreislauf innerhalb des Prozesses zu schließen. Die für die Vorverdampfung benötigte Energie kann durch die freiwerdende Kondensationsenergie der chlorwasserstoffhaltigen Dämpfe aus dem Hydrolysereaktor zur Verfügung gestellt werden. Durch das Austreiben der freien Chlorwasserstoffsäure aus der eisenhaltigen salzsauren Lösung vor dem Einbringen in den Hydrolysereaktor wird die Chloridfracht in den Hydrolysereaktor reduziert, wodurch wiederum die Zugabe von Wasser zum Regeln der Salzkonzentration und des Dampf-Flüssigkeitsgleichgewichtes reduziert werden kann. Verglichen dazu wird in WO 2009/153321 der freie Chlorwasserstoff vor dem Hydrolysereaktor durch die vorangeschaltete Oxidationsreaktion verbraucht. Die im Produktionsbetrieb anfallende aufzubereitende eisenhaltige salzsaure Lösung kann sowohl in den Vorverdampfer als auch direkt in den Hydrolysereaktor eingebracht werden.

Weiterführend wird nun eine erfindungsgemäße Verfahrensvariante vorgestellt, welche den Aufwand für die Erzeugung der gereinigten Chlorwasserstoffsäure reduziert und somit energetisch und wirtschaftlich günstiger ist. Diese erfindungsgemäße Verfahrensvariante setzt voraus, dass die Konzentration von Chlorwasserstoff im chlorwasserstoffhaltigen Dampf aus dem Hydrolysereaktor sich im überazeotropen Bereich befindet.

Der chlorwasserstoffhaltige Dampf aus dem Hydrolysereaktor, mit überazeotroper Chlorwasserstoffkonzentration, wird dabei in einem Aufkonzentrierungsprozess in zwei Fraktionen geteilt, in eine Chlorwasserstofffraktion mit einer Konzentration von Chlorwasserstoff von min. 70%, vorzugsweise min. 80%, und einer weiteren Fraktion, die min. 10%, vorzugsweise min. 15%wt, Chlorwasserstoff enthält, welche direkt als regenerierte Säure dem Produktionsprozess zum Schließen des Chloridkreislaufes rückgeführt wird. Neben den bereits erwähnten Verfahren zur Aufkonzentrierung von Chlorwassserstoff kann auch direkt eine überazeotrope Rektifikationskolonne eingesetzt werden. Dabei erhält man als Kopfprodukt hochkonzentrierten Chlorwasserstoff mit einer Konzentration von min. 70%wt, vorzugsweise 80%wt. Als Sumpfprodukt fällt Chlorwasserstoffsäure an, deren Konzentration min. der azeotropen Konzentration bei Betriebsdruck entspricht. Die azeotrope Kolonne wird bei einem Betriebsdruck in einem Bereich bis max. 50 bar, vorzugsweise 30 bar betreiben.

Der chlorwasserstoffhaltige Dampf aus dem Hydrolysereaktor wird einerseits kondensiert und in flüssiger Form oder andererseits direkt dampfförmig in die Aufkonzentrierung geleitet. Diese erfindungsgemäße Verfahrensvariante ist energetisch besonders günstig, da bei der Aufkonzentrierung von Chlorwasserstoffsäure nicht über den azeotropen Punkt hinweg gearbeitet wird.

Im überazeotropen Bereich fällt die Kondensationstemperatur eines chlorwasserstoffhaltigen Dampfes mit erhöhter Chlorwasserstoffkonzentration rapide ab. Bei Atmosphärendruck beträgt die Siedetemperatur des azeotropen Gemisches, das bei ca. 20%wt Chlorwasserstoff liegt, 108°C und die Kondensationstemperatur von reinem Chlorwasserstoff beträgt -70°C. Bei Kondensation von chlorwasserstoffhaltigen Dämpfen mit überazeotropen Gemischen sind daher Kühlmedien mit vergleichsweisen tiefen Temperaturen erforderlich, um die chlorwasserstoffhaltigen Dämpfe vollständig auszukondensieren. Zum vollständigen Auskondensieren von chlorwasserstoffhaltigen Dämpfen mit einer Chlorwasserstoffkonzentration von 35%wt wird eine Kondensationstemperatur von 71°C benötigt. Wenn freiwerdende Kondensationsenergie prozessintern zum Betreiben eines Vorverdampfer verwendet wird, ist dieses Temperaturniveau unter Umständen bereits zu gering, da in weiterer Folge auch noch die Kondensationsenergie der Dämpfe aus dem besagten Vorverdampfer mittels Kühlwasser abgeführt werden muss. Hierbei ist prozessintern ein weiteres tieferliegendes Temperaturniveau zu berücksichtigen.Für den Fall, dass das vorhandene Temperaturniveau des zur Verfügung stehenden Kühlmediums zu gering für eine vollständige Kondensierung der chlorwasserstoffhaltigen Dämpfe aus dem Hydrolysereaktor ist, ist es daher erforderlich, zusätzlich in die besagten Dämpfe aus dem Hydrolysereaktor Wasser, vorzugsweise prozessinternes Wasser, um Verdünnung der regenerierten Säure zu verhindern, einzudüsen, um die Konzentration der chlorwasserstoffhaltigen Dämpfe aus dem Hydrolysereaktor in Richtung azeotropen Punkt zu verschieben. Durch Verringerung der Konzentration des Chlorwasserstoffes in den besagten Dämpfe von z.B. 35% auf 27% wird der Temperaturbereich für die vollständige Kondensation von 71 - 107°C auf 100 - 108°C angehoben. Da prozesstechnisch die Konzentration des Chlorwasserstoffes im chlorwasserstoffhaltigen Dampf aus dem Hydrolysereaktor nicht in-situ gemessen wird, ist eine automatische Regelung der Wassereindüsung zur Verringerung der Konzentration des Chlorwasserstoffes im besagten Dampf nicht möglich. Für die Prozessführung der erfindungsgemäßen Verfahrensvariante, bei der der aufbereitete Chlorwasserstoff mit einer Reinheit von min. 70, vorzugsweise min. 80%, mit einer überazeotropen Rektifikationskolonne produziert wird, ist es aber unabdingbar, dass trotz Verdünnung des chlorwasserstoffhaltigen Dampfes aus dem Hydrolysereaktor eine überazeotrope Chlorwasserstoffkonzentration vorliegt.

Es ist daher sinnvoll die überazeotrope Chlorwasserstoffsäure für die Herstellung von reinem Chlorwasserstoff entsprechend der erfindungsgemäßen Verfahrensvariante zu erzeugen, indem die Kondensation der chlorwasserstoffhaltigen Dämpfe aus dem Hydrolysereaktor in zwei Stufen durchgeführt, wodurch die Prozessregelung erheblich vereinfacht wird In der ersten Kondensationsstufe wird der überazeotrope Dampf aus dem Hydrolysereaktor bei niedriger Kondensationstemperatur teilweise kondensiert und in die besagte Chlorwasserstoffkonzentrierung geleitet. Die im ersten Kondensationsschritt nicht auskondensierten chlorwasserstoffhaltigen Dämpfe aus dem Hydrolysereaktor werden in einem weiteren Kondensationsschritt auskondensiert. Hierfür wird zusätzlich Wasser in den Hydrolysedampf eingedüst. Die Konzentration des Chlorwasserstoffes wird dabei in Richtung des azeotropen Punktes verschoben, wodurch die Kondensationstemperatur der chlorwasserstoffhaltigen Dämpfe erhöht wird. Vorzugsweise wird prozessinternes Wasser verwendet um nicht den Wasserhaushalt des Prozesses zu beeinflussen, was zur Verdünnung der regenerierten Säure führt.

Im Bereich der Hydrometallurgie werden durch Aufschluss von Erzen mit Chlorwasserstoffsäure Metalle aus dem Erz gelöst. Die Zusammensetzung der verschiedenen Erze ist von Lagerstätte zu Lagerstätte unterschiedlich und oft ist es die Regel, dass Konzentrationen von Wertstoffen wie z.B. Seltene Erden sich im ppm-Bereich befinden, während der Hauptbestandteil Eisen ist. Andere nicht hydrolisierbare Metallchloride, z.B.: CaCl₂ MgCl₂, NaCl, KCl sind mitunter ebenfalls enthalten, wobei sich die Konzentrationen in Bereichen von einigen Gewichtsprozenten befinden.

Weiters beschreibt Harris et al. in "The Jaguar Nickel Inc. Sechol Laterite Project Atmospheric Chloride Leach Process", International Laterite Nickel Symposium; 2004 ein Erzlaugungsverfahren, bei denen Metallchloridsalze wie z.B. Magnesiumchlorid in hohen Konzentrationen beigefügt werden, um die Aktivität der freien Chlorwasserstoffsäure während des Laugungsvorganges zu erhöhen. Auch hier wird der Wertstoff, der in diesem Fall Nickel ist, von einem anderen nicht hydrolisierbaren Metallchlorid, d.h. Magnesiumchlorid, in der Konzentration überlagert.

Für die Gewinnung von Wertstoffen aus einer eisenhaltigen salzsauren Lösung, deren Konzentrationen in der besagten Lösung im Verhältnis zu anderen nicht hydrolysierbaren Metallchloriden gering sind, ist es daher erforderlich, die Aufkonzentrierung der nicht hydrolysierbaren Metallchloride durch Hydrolyse von dreiwertigem Eisen und der erfindungsgemäßen selektiven Kristallisation durch Erhöhung der Konzentration des freien Chlorwasserstoffes in der besagten Lösung mehrstufig durchzuführen.

Die eisenhaltige salzsaure Lösung wird in einen Hydrolysereaktor geleitet, wo durch die Hydrolyse von dreiwertigem Eisen Hämatit und Chlorwasserstoff gebildet wird. Nicht hydrolysierbare Metallchloride werden dabei aufkonzentriert. Die Konzentration der nicht hydrolysierbaren Metallchloride in der aufkonzentrierten eisenhaltigen salzsauren Lösung beträgt max. 30%wt, vorzugsweise max. 20%wt., wobei die Konzentration des Eisen(III)chlorides in der besagten Lösung 30 bis 80%wt, vorzugsweise 40%wt bis 75%wt, beträgt. Der Hydrolysereaktor wird dabei bei Temperaturen von 150° bis 300°C, vorzugsweise bei Temperaturen von 160°C bis 200°C und einem Druck von -0,8 bar bis 20 bar, vorzugsweise bei -0,5 bis 10 bar betrieben. Der Chlorwasserstoffkonzentration im Hydrolysedampf liegt bei 10 bis 40%wt, vorzugsweise 15 bis 35%wt.

Ein Teil der aufkonzentrierten eisenhaltigen salzsauren Lösung aus dem Hydrolysereaktor wird aus dem Hydrolysereaktor entnommen und das als Hämatit gefällte Eisen wird abfiltriert. Es besteht die Möglichkeit, die besagte aufkonzentrierte eisenhaltige salzsaure Lösung vor den weiteren Verfahrensschritten, der Filtration bzw. der Kristallisation, abzukühlen und gegebenenfalls zu verdünnen, um unkontrollierte Kristallisation von Eisen(III)chlorid zu verhindern. Die abfiltrierte eisenhaltige salzsaure Lösung wird vollständig oder zum Teil in die Kristallisation weitergeleitet. Der verbleibende Rest der besagten eisenhaltigen salzsauren Lösung wird in den Hydrolysereaktor oder in einer vorangegangenen Prozessstufe, z.B.: einen Vorverdampfer, zurückgepumpt. Im Kristallisationsreaktor werden nicht hydrolisierbare Metallchloride selektiv durch Erhöhung der Konzentration an freiem Chlorwasserstoff in der eisenhaltigen salzsauren Lösung aus der besagten Lösung auskristallisiert und somit von Eisen getrennt. Die Kristallisation wird bei Temperaturen von 10 bis 200°C, vorzugweise zwischen 20 und 150°C, und einem Druck von -0,8 bis 30 bar, vorzugsweise -0,5 bis 20bar, durchgeführt Die eisenhaltige salzsaure Lösung enthält 10 bis 70%wt, vorzugsweise 20 bis 60%wt, Eisen(III)chlorid. Die Konzentration des freien Chlorwasserstoffs in der besagten Lösung wird auf max. 50%wt, vorzugsweise max. 40%wt erhöht.

Die Löslichkeit der nicht hydrolysierbaren Metallchloride nimmt mit erhöhter Konzentration stetig ab. Vorzugsweise kann die Konzentration des freien Chlorwasserstoffes im ersten Kristallisationsschritt so gewählt werden, dass im besagten Kristallisationsschritt vorzugsweise die nicht hydrolisierbaren Metallchloride, die ein vielfaches der Konzentration der Wertstoffe aufweisen, ausgefällt werden, während die Löslichkeitsgrenze der besagten Wertstoffe bei vorhandener Konzentration freien Chlorwasserstoffes in der besagten Lösung nicht erreicht wird.

Nach der Filtration der kristallisierten nicht hydrolysierbaren Metallchloride wird die mit nicht hydrolysierbaren Metallchloriden abgereicherte eisenhaltige salzsaure Lösung in einen zweiten Hydrolysereaktor geleitet, wo nicht hydrolysierbare Metallchloride weiter aufkonzentriert werden. Die Regelung der Salzkonzentration und damit des Dampf-Flüssigkeitsgleichgewichtes im Hydrolysereaktor erfolgt durch Zugabe von Wasser, wobei prozessinternes Wasser aus Gründen des Wasserhaushaltes zu bevorzugen ist. Aus dem zweiten Hydrolysereaktor wird wiederum ein Teil der eisenhaltigen salzsauren Lösung entnommen, der Hämatit wird abfiltriert und in einem zweiten Kristallisationsschritt werden durch Erhöhung der Konzentration des freien Chlorwasserstoffes nicht hydrolysierbare Metallchloride auskristallisiert und abfiltriert.

Tatsache ist, dass die in der ursprünglichen eisenhaltigen salzsauren Lösung enthaltenen höher konzentrierten Metallchloride im ersten Kristallisationsschritt nicht vollständig auskristallisiert werden können und somit in die zweite Prozessstufe gelangen. Wenn die Konzentrationsunterschiede der nicht hydrolisierbaren Metallchloride und der Wertstoffe weit auseinander liegen, z.B. CaCl₂ in Bereichen 1-5% und Chloride von Seltenerdenmetallen in Bereichen von 1 - 1000 ppm, reicht unter Umständen ein zweistufiges Verfahren nicht aus, um die besagten Wertstoffe, z.B.: Seltenerdmetalle, im zweiten Hydrolyseschritt soweit aufzukonzentrieren, dass die besagten Wertstoffe im zweiten Kristallisationschritt durch Erhöhung der freien Chlorwasserstoffkonzentration auskristallisiert werden können. In diesem Fall wird Hydrolyse und Kristallisation mehrmals wiederholt. Nach dem letzten Kristallisationsschritt wird die abfiltrierte eisenhaltige salzsaure Lösung in einem der vorangegangenen Prozessschritte rückgeführt.

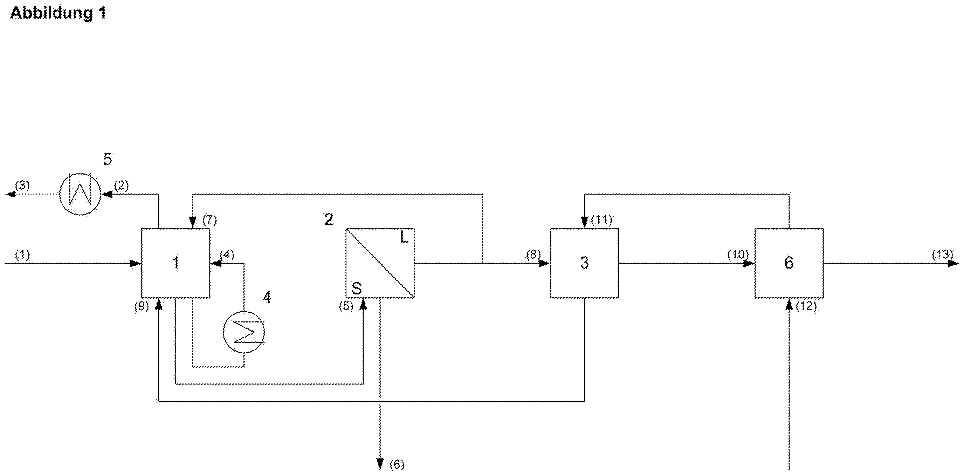

Die vorliegende Erfindung wird nun anhand der beiliegenden Zeichnungen näher erläutert, auf welche sie nicht beschränkt sein soll. In Abbildung 1 ist ein nicht-erfindungsgemäßes Verfahren dargestellt, bei dem die in der eisenhaltigen salzsauren Lösung enthaltenen nicht hydrolysierbaren Metallchloride in der eisenhaltigen salzsauren Lösung aufkonzentriert werden und nachfolgend in einem weiteren Verfahrensschritt mittels Lösungsmittelextraktion direkt und selektiv aus der besagten eisenhaltigen salzsauren Lösung gewonnen werden.

Die eisenhaltige salzsaure Lösung wird über die Zuführungsleitung (1) in den Hydrolysereaktor 1 gepumpt, wo die Hydrolysereaktion stattfindet. Dabei reagiert das in der Lösung befindliche Eisen(III)chlorid mit Wasser zu Chlorwasserstoff und zu Eisenoxid, vorzugsweise Hämatit, das aus der Lösung ausfällt. Nicht hydrolysierbare Metallchloride in der eisenhaltigen salzsauren Lösung werden so aufkonzentriert. Ein Teil der Lösung wird aus dem Hydrolysereaktor 1 entnommen und über die Zirkulationsleitung (4) in den externen Wärmetauscher 4, der zum Beispiel mit Dampf oder Wärmeträgeröl betrieben wird, gepumpt. Die Lösung wird dabei im Wärmetauscher 4 überhitzt und in den Hydrolysereaktor 1 entspannt, dadurch wird Wasser und Chlorwasserstoff verdampft. Dieser Hydrolysedampf wird über die Abzugsleitung (2) aus dem Hydrolysereaktor 1 abgezogen und im Kondensor 5 kondensiert. Das anfallende Regenerat wird über die Ableitung (3) aus dem Prozess abgezogen und wiederum im Produktionsbetrieb eingesetzt, wodurch der Chloridkreislauf geschlossen wird.

Vor der eigentlichen Abtrennung der nicht hydrolysierbaren Metallchloride aus der eisenhaltigen salzsauren Lösung durch Lösungsmittelextraktion wird die aus dem Hydrolysereaktor 1 entnommene eisenhaltige salzsaure Lösung über die Zuführungsleitung (5) in die Vorrichtung zur Filtration 2 geleitet. Das aus der eisenhaltigen salzsauren Lösung gefällte Eisenoxid, vorzugsweise Hämatit, wird abfiltriert und über die Ableitung (6) aus dem Prozess ausgeschleust. Das dabei gewonnene eisenhaltige salzsaure Filtrat wird zumindest zum Teil über die Zuleitung (8) in die Vorrichtung 3 zur Lösungsmittelextraktion gepumpt. Das verbleibende Filtrat wird über die Rückführleitung (7) zurück in den Hydrolysereaktor 1 gepumpt.

In der Vorrichtung 3 wird die eisenhaltige salzsaure Lösung mit einer oder mehreren mit ihr nicht mischbaren organischen Phase(n) in direkten Kontakt gebracht. Die nicht hydrolysierbaren Metallchloride werden selektiv aus dem eisenhaltigen salzsauren Filtrat in die organische(n) Phase(n) extrahiert. Die von den nicht hydrolysierbaren Metallchloriden befreite eisenhaltige salzsaure Lösung wird dann aus der Vorrichtung 3 über die Rückführungsleitung (9) in den Hydrolysereaktor 1 zurückgepumpt. Die anfallende organische Lösung mit den extrahierten Metallchloriden wird über die Zuführungsleitung 10 in die Vorrichtung 6 zum Strippen der organischen Phase gepumpt. Über die Zuführungsleitung (12) wird Wasser zum Strippen der organischen Phase in die Vorrichtung 6 gepumpt. Die extrahierten Metallchloride werden von der organischen Phase in die wässrige Phase extrahiert und die mit den Metallchloriden beladene wässrige Phase wird über die Ableitungsleitung (13) zur Herstellung von Metallen weitergeleitet. Die von den nicht hydrolysierbaren Metallchloriden befreite organische Phase wird aus der Vorrichtung 6 über die Rückführungsleitung (11) in die Vorrichtung 3 zur Lösungsmittelextraktion zurückgeführt.

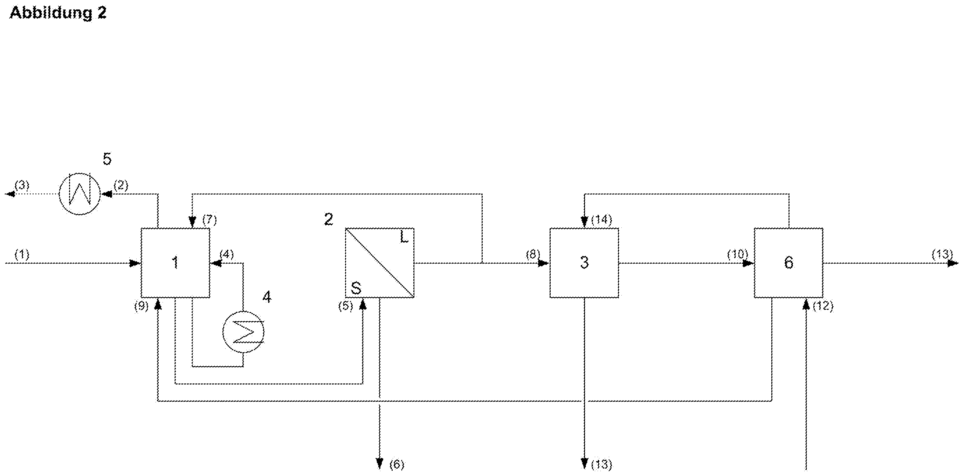

In Abbildung 2 wird ein weiteres nicht-erfindungsgemäßes Verfahren dargestellt, bei dem die in der eisenhaltigen salzsauren Lösung enthaltenen nicht hydrolysierbaren Metallchloride aufkonzentriert werden und nachfolgend in einem weiteren Verfahrensschritt mittels Lösungsmittelextraktion direkt und selektiv Eisen aus der besagten eisenhaltigen salzsauren Lösung gewonnen wird. Nicht explizit erwähnte Leitungen und Vorrichtungen mit gleichen Bezugszahlen werden in der Beschreibung zu Abbildung 1 erläutert.

Im Prinzip ähnelt dieses Verfahren dem zuvor in Abbildung 1 beschriebenen Verfahren, wobei in der Vorrichtung 3 für Lösungsmittelextraktion auch das restliche in der Lösung enthaltenen Eisen aus der wässrigen Phase in die organische Phase extrahiert wird. Die in der wässrigen Phase verbleibenden Metallchloride werden über die Ableitung (13) weiteren Aufarbeitungsschritten zugeführt. Die mit Eisen beladene organische Phase wird über die Zuführungsleitung (10) zur Vorrichtung zum Strippen der organischen Phase 6 gepumpt und mit Wasser, das über die Zuführungsleitung (12) in die besagte Vorrichtung 6 gepumpt wird, in Kontakt gebracht. Das in der organischen Phase enthaltene Eisen wird in die wässrige Phase extrahiert und über die Rückführleitung (9) zurück in den Hydrolysereaktor 1 gepumpt.

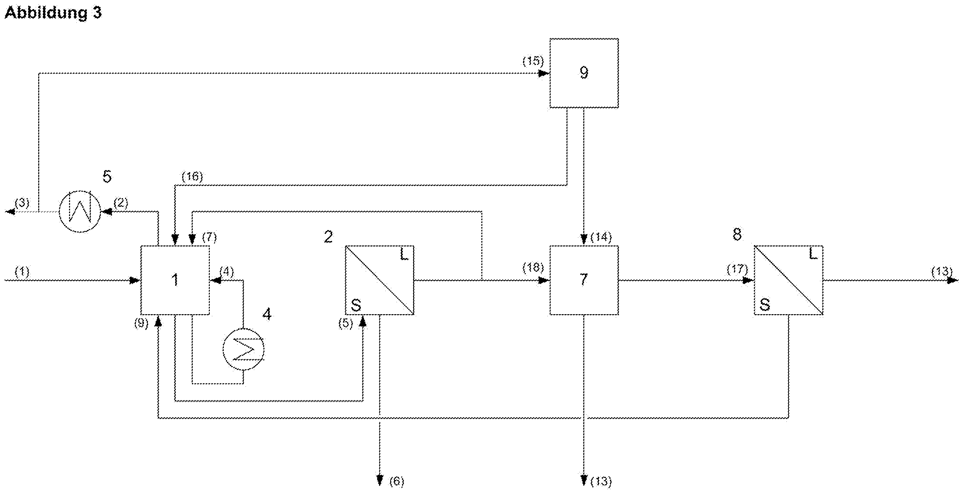

In der Abbildung 3 ist das erfindungsgemäße Verfahren dargestellt, bei dem die in der eisenhaltigen salzsauren Lösung enthaltenen nicht hydrolysierbaren Metallchloride in der eisenhaltigen salzsauren Lösung aufkonzentriert werden und nachfolgend in einem weiteren Verfahrensschritt durch Erhöhung der Konzentration von Chlorwasserstoffsäure in der aufkonzentrierten eisenhaltigen salzsauren Lösung die besagten nicht hydrolysierbaren Metallchloride als Metallchloridsalze ausgefällt werden. Nicht explizit erwähnte Leitungen und Vorrichtungen mit gleichen Bezugszahlen werden in der Beschreibung zu Abbildung 1 erläutert.

Die in der aufzubereitenden eisenhaltigen salzsauren Lösung enthaltenen Metallchloride werden wie in den beiden zuvor beschriebenen Verfahrensvarianten im Hydrolysereaktor 1 aufkonzentriert. Nach der Filtration von Hämatit in der Vorrichtung zur Filtration 2 wird das eisenhaltige salzsaure Filtrat über die Zuführungsleitung (18) in den Kristallisationsreaktor 7 gepumpt. Über die Zuführungsleitung (14) wird aufbereiteter Chlorwasserstoff aus der Vorrichtung 9 zur Aufkonzentrierung von Chlorwasserstoff in den Kristallisationsreaktor 7 eingebracht, wo aufgrund der geringen Löslichkeit der nicht hydrolysierbaren Metallchloriden diese als Metallchloridsalze aus der Lösung gefällt werden. Über die Zuführungsleitung (17) wird die besagte eisenhaltige salzsaure Lösung mit den gefällten Metallchloridsalzen in die Vorrichtung für die Metallsalzfiltration 8 gepumpt. Das Filtrat wird über die Rückführleitung (9) zurück in den Hydrolysereaktor gepumpt, die Metallchloridsalze werden über die Ableitung (13) abgezogen.

Um den für die Kristallisation benötigten Chlorwasserstoff zu erzeugen, wird ein Teil des im Kondensor 5 gewonnenen Regenerates über die Zuführleitung (15) in die Vorrichtung 9 zur Aufkonzentrierung von Chlorwasserstoff gepumpt. Über die Rückführleitung (16) wird zum Ausgleich des Wasserhaushaltes das durch die Aufkonzentrierung des Chlorwasserstoffes gewonnene Wasser in den Hydrolysereaktor (1) zurückgeführt.

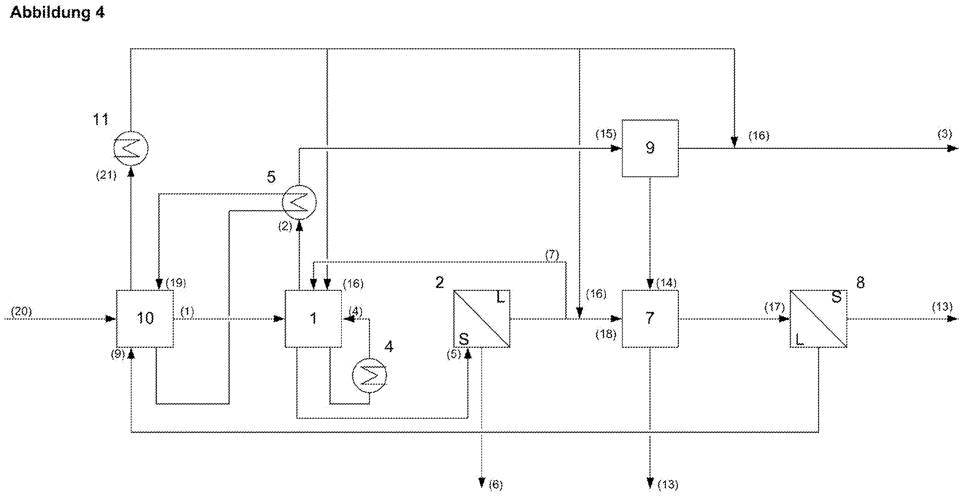

Eine weitere Ausführungsform der vorliegenden Erfindung ist in der Abbildung 4 dargestellt. Die mit nicht hydrolisierbaren Metallchloriden versetzte eisenhaltige salzsaure Lösung wird über die Zuführungsleitung (20) in den Vorverdampfer 10 geleitet. Zusätzlich bindet die Rückführleitung der eisenhaltigen salzsauren Lösung (9) in den Vorverdampfer 10 ein, kann aber in einer möglichen Ausführungsform auch in den Hydrolysereaktor 1 einbinden. Im Vorverdampfer 10 wird die besagte eisenhaltige salzsaure Lösung aufkonzentriert. Die dafür benötigte Energie wird durch die Kondensation der chlorwasserstoffhaltigen Dämpfe aus dem Hydrolysereaktor 1 bereitgestellt. Als eine mögliche Ausführungsform wird die Zirkulationsleitung für den Vorverdampfer (19) über den Kondenser 5 geführt. Somit ist die eisenhaltige salzsaure Lösung im Vorverdampfer 10 das Kühlmedium für die im Kondenser 5 auskondensierten chlorwasserstoffhaltigen Dämpfe aus dem Hydrolysereaktor 1.

Die Dämpfe aus dem Vorverdampfer 10 werden über die Abzugsleitung (21) abgezogen und in dem Kondenser für den Vorverdampfer 11 auskondensiert. Das dabei entstandene Destillat wird gesammelt und über die Rückführung für Wasser 16 prozessintern verteilt. Wasser wird einerseits im Hydrolysereaktor 1 benötigt, um dort die Konzentration der eisenhaltigen salzsauren Lösung zu regeln. Andererseits wird Wasser benötigt, um die aus dem Hydrolysereaktor 1 entnommene eisenhaltige salzsaure Lösung nach der Filtration zu verdünnen, um unkontrollierte Kristallisation von Eisen(III)chlorid beim Abkühlen der besagten Lösung zu vermeiden. Überschüssiges Wasser wird gemeinsam mit der in der Vorrichtung zur Produktion von Chlorwasserstoff 9 erzeugten Chlorwasserstoffsäure über die Ableitung (3) aus dem Prozess geschleust.

An dieser Stelle ist anzumerken, dass diese erfindungsgemäße Verfahrensvariante einen geschlossenen Wasserhaushalt hat. Es ist insofern wichtig nach Möglichkeit zu vermeiden, dass von außerhalb kein Wasser in den Prozess eingebracht wird. Bei Betrachtung der Bilanzgrenzen stellt man fest, das Wasser und Chloride ausschließlich über die Zuleitung (20) in den Prozess eingebracht werden, während abgesehen von Chloridverlusten durch Entnahme von nicht nicht hydroliserbaren Metallchloride aus dem Prozess über die Ableitung (13), die Chloride und Wasser als Regenerat über die Ableitung (3) aus dem Prozess ausgeschleust werden. Somit ergibt sich automatisch jene Chlorwasserstoffkonzentration im Regenerat, die ursprünglich im Produktionsprozess eingesetzt wurde. Wasser, das zusätzlich extern in den Prozess eingebracht wird, führt zwangsläufig zur Verdünnung des Regenerates.

Über die Zuführleitung (1) wird die aufkonzentrierte eisenhaltige salzsaure Lösung vom Vorverdampfer 10 in den Hydrolysereaktor 1 transferiert. Im Hydrolysereaktor 1 findet die Hydrolyse statt, wo Eisen(III)chlorid direkt in der Lösung mit Wasser zu Hämatit, der aus der Lösung ausfällt, und zu Chlorwasserstoff umgesetzt wird. Wasser und Chlorwasserstoff wird durch Verdampfung aus dem Hydrolysreaktor 1 über die Abzugsleitung (2) entfernt. Die Energiebereitstellung erfolgt extern, indem in der Zirkulationsleitung im Hydrolysereaktor (4) der Wärmetauscher 4 eingebaut ist. Dieser Wärmetauscher 4 kann mit Dampf oder Wärmeträgeröl oder anderen Energieübertragungsmedien betrieben werden.

Gleichzeitig werden nicht hydrolysierbare Metallchloride im Hydrolysereaktor 1 aufkonzentriert, da sie in Lösung bleiben, während Eisen als Hämatit aus der Lösung gefällt wird und Wasser und Chlorwasserstoff aus der Lösung getrieben werden.

Zu Regelung der Konzentration der Metallchloride der eisenhaltigen salzsauren Lösung im Hydrolysereaktor 1 wird ein Teil der kondensierten Dämpfe aus dem Vorverdampfer über die Rückführung (16) in den Hydrolysereaktor 1 eingebracht.

Das Dampf-Flüssigkeitsgleichgewicht im Hydrolysereaktor 1 ist von entscheidender Bedeutung für die Auslegung des Prozesses. Wichtige Einflussgrößen des Dampf-Flüssigkeitsgleichgewichtes sind neben der Konzentration des Eisen(III)chlorids in der eisenhaltigen salzsauren Lösung im Hydrolysereaktor 1 auch die Konzentrationen der nicht hydrolisierbaren Metallchloride.

Die chlorwasserstoffhaltigen Dämpfe mit überazeotroper Chlorwasserstoffkonzentration werden im Kondenser 5 auskondensiert. Die freiwerdende Kondensationswärme wird zum Beheizen des Vorverdampfers 1 eingesetzt. Im vorliegenden Beispiel ist das Temperaturniveau des zur Verfügung stehenden Kühlmediums, der eisenhaltigen salzsauren Lösung im Vorverdampfer 10, ausreichend niedrig um die vollständige Kondensation der chlorwasserstoffhaltigen Dämpfe aus dem Hydrolysereaktor 1 zu gewährleisten. Die vollständig auskondensierten chlorwasserstoffhaltigen Dämpfe aus dem Hydrolysereaktor 1 werden nun über die Zuleitung (15) in die Vorrichtung zur Produktion von Chlorwasserstoff 9 geleitet. Die Vorrichtung zur Produktion von Chlorwasserstoff 9 kann als eine überazeotrope Kolonne ausgeführt werden, wenn die Konzentration des Chlorwasserstoffes im chlorwasserstoffhaltigen Dampf aus dem Hydrolysereaktor 1 überazeotrop ist. Als Kopfprodukt wird aufkonzentrierter Chlorwasserstoff mit einer Konzentration von min. 70%wt, vorzugsweise min. 80%wt über die Zuleitung (14) in den Kristallisationsreaktor 7 geleitet. Die Konzentration des Chlorwasserstoffes im Sumpfprodukt der überazeotropen Kolonne weist mindestens die azeotrope Zusammensetzung bei Betriebsdruck der überazetropen Rektifikationskolonne auf. Es ist nicht möglich, mittels einer überazeotropen Rektifikation den azeotropen Punkt zu überspringen. Das besagte Sumpfprodukt wird gemeinsam mit den Rest der kondensierten Dämpfe aus dem Vorverdampfer 10 als Regenerat über die Ableitung (3) aus dem Prozess geschleust.

Aus dem Hydrolysereaktor 1 wird ein Teil der eisenhaltigen salzsauren Lösung über die Zuleitung (5) zur Vorrichtung zur Filtration 2 gepumpt. Der im Hydrolysereaktor 1 gebildete Hämatit wird aus der eisenhaltigen salzsauren Lösung abfiltriert und über die Ableitung (6) aus dem Prozess gewonnen und abgeführt. Zumindest ein Teil des Filtrates wird über die Zuleitung (18) von der Vorrichtung zur Filtration 2 in den Kristallisationsreaktor 7 gepumpt. Der übrige Teil des Filtrates wird über die Filtratrückführung (7) in den Hydrolysereaktor 1 zurückgepumpt. Um beim Abkühlen des Filtrates unkontrollierte Kristallisation von Eisen(III)chlorid zu verhindern, wird das Filtrat mit Wasser verdünnt. Dabei wird im vorliegenden Beispiel der kondensierte Dampf aus dem Vorverdampfer über die Rückführung (16) vor dem Kristallisationsreaktor 7 mit dem Filtrat vermischt. Die besagte Rückführung (16) kann auch unmittelbar nach der Entnahme der eisenhaltigen salzsauren Lösung aus dem Hydrolysereaktor oder an einer beliebigen Stelle dazwischen eingebunden werden.

Im Kristallisationsreaktor 7 werden durch Erhöhung der Konzentration des freien Chlorwasserstoffes in der eisenhaltigen Lösung die nicht hydrolysierbaren Metallchloride aus der Lösung auskristallisiert. Der aufbereitete Chlorwasserstoff wird aus der Vorrichtung zur Produktion von Chlorwasserstoff über die Zuleitung Chlorwasserstoff (14) in den Kristallisationsreaktor 7 eingebracht. Über die Zuführleitung (17) wird die mit gefällten nicht hydrolisierbaren Metallchloriden beladene eisenhaltige salzsaure Lösung in eine Vorrichtung zum Filtrieren von Metallchloriden 8 gepumpt. Die festen Metallchloride werden in der Vorrichtung zur Filtration von Metallchloriden 8 abfiltriert und über die Ableitung (13) aus dem Prozess geschleust und in weiteren Prozessschritten aufbereitet. Das Filtrat wird über die Rückführung (9) in den Vorverdampfer zurückgepumpt.

### Beispiel 1

In Beispiel 1 wird ein Versuch zur Bestimmung des Dampf-Flüssigkeitsgleichgewichtes von Manganchlorid als nicht hydrolysierbarem Element in einer konzentrierten Eisen(III)chloridlösung bei Atmosphärendruck bestimmt. Auf einem von außen beheiztem Glasreaktor wird ein Rückflusskühler installiert. Die zu untersuchende Lösung wird im Reaktor vorgelegt und zum Sieden gebracht. Die Temperatur wird kontinuierlich aufgezeichnet. Nachdem sich ein Gleichgewicht eingestellt hat, wird die Zusammensetzung der konzentrierten Eisen(III)chloridlösung im Glasreaktor und im Destillat analysiert. Die Siedetemperatur wird zum Probenahmezeitpunkt ebenfalls aufgezeichnet.

Es wurde eine Versuchsmatrix gewählt, bei der die Gesamtkonzentration der Metallsalze (Manganchlorid und Eisen(III)chlorid) 76%wt beträgt. Klarerweise nimmt bei Erhöhung der Manganchloridkonzentration in der Lösung die Konzentration des Eisen(III)chlorides ab.

Mit zunehmender Manganchloridkonzentration nimmt die Konzentration des Chlorwasserstoffes in der Dampfphase ab und die Siedetemperatur sinkt ebenfalls.

| Konzentration von MnCl₂ in der Eiseh(II)chloridlösung [%wt] | Konzentration von HCl in der Dampfphase [%wt] | Siedetemperatur [°C] |
|---|---|---|
| 0 | 26,4 | 170 |
| 5 | 22,8 | 169 |
| 10 | 19,3 | 167 |
| 15 | 14,1 | 164 |

Die vorliegenden Ergebnisse zeigen, dass das Dampf-Flüssigkeitsgleichgewicht durch die Präsenz von nicht hydrolysierbaren Metallchloriden erheblich beeinflusst wird.

### Beispiel 2:

In einem weiteren Versuch wurde der Dampfdruck von Nickelchlorid in der Eisen(III)chloridlösung bestimmt. Die Versuche wurden auf Basis einer Gesamtsalzkonzentration von 75%wt durchgeführt.

| Konzentration von NiCl₂ in der Eisen(III)chloridlösung [%wt] | Konzentration von HCl in der Dampfphase [%wt] | Siedetemperatur [°C] |
|---|---|---|
| 0 | 23,4 | 168 |
| 2 | 21,7 | 175 |
| 4 | 20,2 | 178 |

Im Gegensatz zu den Dampf-Flüssigkeitsversuchen von Manganchlorid steigt die Siedetemperatur von Nickelchlorid mit zunehmender Konzentration an, während die Konzentration von Chlorwasserstoff in der Dampfphase absinkt.

### Beispiel 3:

Durch Erhöhung der Gesamtsalzkonzentration wird die Siedetemperatur sowie die Chlorwasserstoffkonzentration in der Dampfphase erhöht. Eine konzentrierte wässrige Eisen(III)chloridlösung mit 72,8 %wt Eisen(III)chlorid und einer Nickelkonzentration von 4,6 %wt hat einen Siedepunkt von 184°C. Die Chlorwasserstoffkonzentration im Dampf beträgt 27,6 %wt.

### Beispiel 4:

In Beispiel 4 wurde eine semikontinuierliche Hydrolyse durchgeführt. In einem beheizten Glasreaktor wird eine reine synthetische Eisen(III)chloridlösung mit 75%wt vorgelegt. Der Dampf wird über eine Destillierbrücke geleitet und auskondensiert. Das Kondensat wird gesammelt. Die Lösung im Hydrolysereaktor wird zum Sieden gebracht. Nach Erreichen der Siedetemperatur wird der Feed in den Hydrolysereaktor eingeschaltet. Die Zusammensetzung der Feedlösung beträgt 30%wt Eisen(III)chlorid und 2%wt Nickelchlorid. Die Feedrate wurde geregelt, sodass die Siedetemperatur im Glasreaktor bei 170°C konstant gehalten wird. Der Versuch wurde über 3h durchgeführt und die Konzentration von Nickelchlorid in der eisenhaltigen salzsauren Hydrolyselösung beträgt 1,1%wt am Versuchsende. Insgesamt wurden ca. 200g Eisenoxid produziert Mittels GDMS (glow discharge mass spectroscopy) wurde die Nickelkonzentration im Eisenoxid bestimmt und betrug 200 ppm. Mit diesem Versuch wird gezeigt, dass Nickel nicht hydrolysiert und daher im Hydrolysereaktor aufkonzentriert werden kann.

### Beispiel 5:

In Beispiel 5 wurden Kristallisationsversuche zur Fällung von Nickelchlorid aus einer eisenhaltigen salzsauren Lösung durchgeführt. In einen Kristallisationsreaktor wurde eine synthetische Lösung aus Eisen(III)chlorid und Nickelchlorid vorgelegt. Zu Beginn des Versuches enthält die Lösung 47%wt Eisen(III)chlorid und 11%wt Nickelchlorid. In den Reaktor wird reiner Chlorwasserstoff eingedüst und in der eisenhaltigen salzsauren Lösung gelöst. Der Versuch wurde bei 60°C durchgeführt. Die Temperierung erfolgt extern mittels Thermostaten.

| Konzentration der freien HCl [%wt] | Konzentration von Nickelchlorid [%wt] | Konzentration von Eisen(III)chlorid [%wt] |
|---|---|---|
| 1,2 | 10,9 | 46,9 |
| 5,0 | 10,1 | 42,7 |
| 10,7 | 7,4 | 40,5 |
| 14,9 | 0,6 | 45,0 |
| 20,4 | 0,3 | 39,2 |

In der Tabelle wird gezeigt, wie sich die Konzentration von Nickelchlorid und Eisenchlorid bei Erhöhung der freien Chlorwasserstoffkonzentration entwickeln. Zu Beginn sinkt sowohl die Konzentration von Nickelchlorid als auch die Konzentration von Eisen(III)chlorid in der Lösung. Durch Lösen von Chlorwasserstoff in der Lösung werden beide Metallchloride "verdünnt". Ab einer freien Chlorwasserstoffkonzentration von 5%wt wird die Löslichkeitsgrenze von Nickelchlorid erreicht und kristallisiert aus. Da der Masseverlust der eisenhaltigen salzsauren Lösung durch Kristallisation von Nickelchlorid nicht durch den Massegewinn durch Lösen von Chlorwasserstoff kompensiert wird, steigt ab diesem Zeitpunkt die Eisen(III)chloridkonzentration wiederum an. Nachdem Nickelchlorid fast vollständig aus der Lösung gefällt wurde, sinkt die Eisen(III)chloridkonzentration wieder durch Zunahme der freien Chlorwasserstoffkonzentration wieder ab.

Nach Beendigung des Versuches wurde die Lösung abfiltriert. Der Filterkuchen wurde in Wasser aufgelöst und mittels ICP-OES analysiert. Es ist zu berücksichtigen, dass der Filterkuchen nicht für die Analyse gewaschen wurde. Der Filterkuchen enthält 37% Ni, 5,7% Fe, und 45% Cl. Der Rest ist Kristallwasser.

Der Versuch hat gezeigt, dass es möglich ist, ein nicht hydrolysierbares Metallchlorid aus einer Eisen(III)chloridlösung selektiv zu kristallisieren.

Zum Vergleich wird in der folgenden Tabelle die Löslichkeit von Nickelchlorid im System NiCl₂-HCl-H₂O bei 80°C präsentiert (Solubilities on Inorganic and Metalorganic Compounds; Seidell und Linke; 1965).

| Konzentration der freien HCl [%wt] | Konzentration von Nickelchlorid [%wt] |
|---|---|
| 0,0 | 45,96 |
| 1,0 | 44,00 |
| 3,82 | 39,39 |
| 6,64 | 34,86 |
| 11,54 | 28,09 |
| 15,04 | 22,79 |
| 19,54 | 16,40 |
| 23,2 | 11,12 |
| 26,2 | 8,63 |

Bei einer Chlorwasserstoffkonzentration von 26,2 %wt im System NiCl₂-HCl-H₂O beträgt die Löslichkeit von Nickelchlorid 8,63%wt. Das heißt, dass die Löslichkeitsgrenze von Nickelchlorid durch die Präsenz von Eisen(III)chlorid herabgesetzt wird. Zum Vergleich beträgt die Löslichkeit von Nickelchlorid 0,3%wt bei 39,2 %wt Eisen(III)chlorid und 20,4 %wt freiem Chlorwasserstoff.

### Beispiel 6:

Ein weiterer Kristallisationsversuch wird durchgeführt, bei dem eine Eisen(III)chloridlösung mit zwei nicht hydrolysierbaren Metallchloriden, Nickelchlorid und Cobaltchlorid, durchgeführt wird.

| Konzentration der freien HCl [%wt] | Konzentration von Nickelchlorid [%wt] | Konzentration von Cobaltchlorid [%wt] | Konzentration von Eisen(III)chlorid [%wt] |
|---|---|---|---|
| 5,9 | 5,3 | 5,1 | 46,9 |
| 6,1 | 4,8 | 4,7 | 42,1 |
| 13,9 | 3,1 | 1,2 | 40,5 |
| 18,1 | 0,5 | 0,7 | 45,0 |
| 20.4 | 0,1 | 1,8 | 39,2 |

Die Ergebnisse zeigen, dass die Trennung von nicht hydrolysierbaren Metallchloriden von einer Eisen(III)chloridlösung durch Kristallisation von Chlorwasserstoff auch bei zwei nicht hydrolisierbaren Metallchloriden funktioniert. Der ungewaschene Filterkuchen am Ende des Versuches enthält 9,2% Fe, 8,5% Co, 15,2% Ni und 45% Cl. Der Rest ist eingelagertes Kristallwasser.

### Beispiel 7:

Ein weiterer Kristallisationsversuch mit Cer(III)chlorid wurde durchgeführt.

| Konzentration der freien HCl [%wt] | Konzentration von Cer(III)chlorid [%wt] | Konzentration von Eisen(III)chlorid [%wt] |
|---|---|---|
| 0 | 10,1 | 53,4 |
| 3,4 | 9,6 | 51,0 |
| 9,5 | 2,2 | 49,8 |
| 12,26 | 0,6 | 51,7 |

Der ungewaschene Filterkuchen, der nach dem Versuchsende gewonnen wurde, enthält 3,5%wt Fe, 34,2%wt Ce, 32%wt Cl. Der Rest ist Kristallwasser.

Dieser Versuch zeigt, dass Chloride vom Seltenerdmetall Cer durch selektive Kristallisation mittels Chlorwasserstoff von einer eisenhaltigen salzsauren Lösung getrennt werden kann.

### Beispiel 8:

In Beispiel 8 wird die Bilanz einer erfindungsgemäßen Prozessvariante gezeigt, die in Abbildung 4 dargestellt ist, bei der eine mit nicht hydrolysierbaren Metallchloriden, nämlich Nickelchlorid, versetzte eisenhaltige salzsaure Lösung aufbereitet wird. Das in der eisenhaltigen salzsauren Lösung enthaltene Nickelchlorid wird im Hydrolysereaktor zunächst aufkonzentriert und in einem weiteren Verfahrensschritt wird das besagte Nickelchlorid durch Erhöhung der Konzentration des freien Chlorwasserstoffes in der eisenhaltigen salzsauren Lösung im Kristallisationsreaktor auskristallisiert und somit vom Eisen getrennt.

Der Prozess verarbeitet in der Stunde 1000 kg einer eisenhaltigen salzsauren Lösung, die durch die Zuführungsleitung für Vorverdampfer (20) in den Vorverdampfer 1 geleitet wird. Die besagte eisenhaltige salzsaure Lösung setzt sich aus 25%wt Eisen(III)chlorid und 1%wt Nickelchlorid zusammen. Im Vorverdampfer 10 wird durch Verdampfung die eisenhaltige salzsaure Lösung aufkonzentriert. Die dafür benötigte Energie, 500 kW, wird durch die Kondensation der chlorwasserstoffhaltigen Dämpfe aus dem Hydrolysereaktor 1 bereitgestellt. Die Verdampfung wird im Unterdruck durchgeführt, um den Siedepunkt auf ca. 60°C im Vorverdampfer 10 zu senken. Im Vorverdampfer 1 wird weiters die Rückführung eisenhaltige salzsaure Lösung (9) aus der Vorrichtung zum Filtrieren von Metallchloriden 8 eingebunden. Der Massenstrom dieser Prozessrückführung beträgt 450 kg/h und setzt sich aus 44 %wt Eisen(III)chlorid, 0,5%wt Nickelchlorid und 15%wt Chlorwasserstoff zusammen.

Über die Abzugsleitung für Vorverdampfer (21) werden 775 kg/h Dämpfe mit ca. 6%wt Chlorwasserstoff aus dem Vorverdampfer 10 abgezogen und im Kondenser für Vorverdampfer 11 auskondensiert. Die freiwerdende Kondensationsenergie, 510kW, wird mittels Kühlwasser abgeführt. Die kondensierten Dämpfe werden innerhalb des Prozesses über die Rückführung von Wasser (16) in den Hydrolysereaktor 1 zur Regelung der Salzkonzentration (515 kg/h) und in den Kristallisationsreaktor 7 zum Verdünnen (125 kg/h) gepumpt. Das restliche Wasser (135 kg/h) wird in die Ableitung für Regenerat (16) eingebunden und mit der aus der Vorrichtung zur Produktion von Chlorwasserstoff 9 abgezogenen Chlorwasserstoffsäure vermischt.

An dieser Stelle ist anzumerken, dass dieses Verfahren einen geschlossenen Wasserhaushalt hat. Das Einbringen von externem Wasser führt zwangsläufig automatisch zur Verdünnung des Regenerates. Wasser und Chloride, gebunden als Metallchloride, werden ausschließlich als eisenhaltige salzsaure Lösung über die Zuführungsleitung für den Vorverdampfer 11 in den Prozess eingebracht. Abgesehen von Chloridverlusten durch Entnahme von Nickelchlorid aus dem Prozess über die Ableitung Metallchloride (13) werden die Chloride und Wasser in Form von Chlorwasserstoffsäure über die Ableitung für Regenerat (3) als Regenerat aus dem Prozess ausgeschleust. Somit ergibt sich automatisch jene Konzentration von Chlorwasserstoff im Regenerat, die Produktionsprozess eingesetzt wurde.

Aus dem Vorverdampfer 10 werden in etwa 675kg/h der konzentrierten eisenhaltigen salzsauren Lösung über die Zuführungsleitung zum Hydrolysereaktor (1) in den Hydrolysereaktor 1 gepumpt. Die besagte konzentrierte eisenhaltige salzsaure Lösung enthält ca. 66%wt Eisen(III)chlorid und 1,9%wt Nickelchlorid und 3%wt freien Chlorwasserstoff.

Im Hydrolysereaktor 1 findet die Hydrolyse, bei der Eisen(III)chlorid mit Wasser zu Hämatit und Chlorwasserstoff reagiert, statt. Der durch die Hydrolysereaktion gebildete Chlorwasserstoff und Wasser werden durch Verdampfung aus der eisenhaltigen salzsauren Lösung getrieben. Die dafür benötigte thermische Energie beträgt 590kW. Da Nickelchlorid im Hydrolysereaktor 1 nicht hydrolysiert, aber gleichzeitig Eisen durch Hydrolyse als Hämatit aus der eisenhaltigen salzsauren Lösung ausfällt, und Wasser und Chlorwasserstoff verdampft werden, kommt es zur Aufkonzentrierung von Nickelchlorid im Hydrolysereaktor 1. Die eisenhaltige salzsaure Lösung im Hydrolysereaktor 1 enthält 73 %wt Eisen(III)chlorid und 4,6%wt Nickelchlorid. Die Zusammensetzung des chlorwasserstoffhaltigen Dampfes hängt vom Dampf-Flüssigkeitsgleichgewicht über der eisenhaltigen salzsauren Lösung im Hydrolysereaktor 1 ab. Wichtige Einflussgrößen sind neben der Konzentration von Eisen(III)chlorid auch die Konzentrationen der nicht hydrolysierbaren Metallchloride. Die Gleichgewichtskonzentration von Chlorwasserstoff im Dampf über der zuvor erwähnten eisenhaltigen salzsauren Lösung beträgt 27,6%wt bei einer Siedetemperatur von 183°C. Um die Salzkonzentration im Hydrolysereaktor 1 konstant halten zu können, ist es daher erforderlich, zusätzlich 515 kg/h Wasser über die Rückführung Wasser (16) in den Hydrolysereaktor 1 zu pumpen.

Aus dem Hydrolysereaktor 1 werden 790 kg/h chlorwasserstoffhaltige Dämpfe über die Abzugsleitung Hydrolysereaktor (2) in einen Wärmetauscher 5 geleitet, wo sie vollständig auskondensiert werden. Die freiwerdende Kondensationsenergie, 500 kW, wird zum Beheizen des Vorverdampfers 10 eingesetzt. Für die vollständige Kondensation der chlorwasserstoffhaltigen Dämpfe aus dem Hydrolysereaktor 1 mit einer Chlorwasserstoffkonzentration von 27,6%wt findet Kondensation in einem Temperaturbereich zwischen 107,6°C und 101°C statt. Die Siedetemperatur im Vorverdampfer 10 wird durch Anlegen eines Unterdruckes auf 60°C herabgesetzt um den Wärmeübergang im Wärmetauscher 5 sicherzustellen.

Nach dem Wärmetauscher 5 werden die vollständig kondensierten chlorwasserstoffhaltigen Dämpfe aus dem Hydrolysereaktor 1 über die Zuführungsleitung von Regenerat zur Vorrichtung zur Aufkonzentrierung von Chlorwasserstoff (15) in die Vorrichtung zur Produktion von Chlorwasserstoff 9 gepumpt. Im vorliegenden Beispiel ist die besagte Vorrichtung zur Produktion von Chlorwasserstoff 9 als eine überazeotrope Rektifikationskolonne ausgeführt. Als Kopfprodukt werden 70 kg/h Chlorwasserstoff mit einer Reinheit von 95%wt erzeugt und über die Zuleitung von Chlorwasserstoff (14) in den Kristallisationsreaktor 7 geleitet. Als Sumpfprodukt werden 720 kg/h Chlorwasserstoffsäure mit einer Chlorwasserstoffkonzentration von 21%wt erzeugt. Die besagte konzentrierte Chlorwasserstoffsäure wird mit den prozessintern nicht erforderlichen kondensierten Dämpfen aus dem Vorverdampfer 10 vermischt (135 kg/h) und als regenerierte Säure über die Ableitung für Regenerat (3) aus den Prozess geschleust. Der Prozess produziert 860 kg/h Chlorwasserstoffsäure mit einer Konzentration von 19 %wt.

Die zum Betreiben der überazeoptropen Rektifikationskolonne benötigte Heizleistung für die Chlorwasserstoffaufbereitung beträgt 40kW und die benötigte Kühlleistung am Kolonnenkopf beträgt 10kW.

Aus dem Hydrolysereaktor 1 werden 400kg/h eisenhaltiger salzsaure Lösung entnommen und über die Zuleitung zur Filtrationsvorrichtung (5) in die Vorrichtung zur Filtration 2 geleitet, wo 120 kg/h Eisenoxid aus der eisenhaltigen salzsauren Lösung abfiltriert und über die Ableitung Eisenoxid (6) aus dem Prozess ausgeschleust werden.

Aus der Vorrichtung zur Filtration 2 werden 270 kg/h Filtrat über die Zuführungsleitung zur Filtrationsvorrichtung (18) in den Kristallisationsreaktor 7 geleitet. Um unkontrolliertes Auskristallisieren von Eisen(III)chlorid bei der Abkühlung des Filtrates zu verhindern, wird das Filtrat mit kondensierten Dämpfen aus dem Vorverdampfer 10 (125 kg/h) vermischt. Das verdünnte Filtrat enthält 50%wt Eisen(III)chlorid und 3,2%wt Nickelchlorid.

In Kristallisationsreaktor 7 werden 70 kg/h konzentrierter Chlorwasserstoff über die Zuleitung Chlorwasserstoff (14) eingebracht. Der Kristallisationsreaktor wird bei 60°C betrieben. Dabei wird die Konzentration des freien Chlorwasserstoffs in der eisenhaltigen salzsauren Lösung im Kristallisationsreaktor 7 auf 15%wt erhöht. Die Löslichkeit von Nickelchlorid beträgt unter diesen Betriebsbedingungen 0,6 %wt.

Das Nickelchlorid kristallisiert als Dihydrat aus und wird in der Vorrichtung zur Filtration für Metallchloride aus der eisenhaltigen salzsauren Lösung abfiltriert. Über die Ableitung Metallchloride (13) werden 14 kg/h Nickelchlorid mit 10%wt Verunreinigungen durch Eisen(III)chlorid aus dem Prozess ausgeschleust und in weiteren Verarbeitungsschritten aufbereitet.

Das Filtrat aus der Vorrichtung zum Filtrieren von Metallchloriden 8 wird über die Rückführung eisenhaltiger salzsaure Lösungen (9) in den Vorverdampfer 10 rückgeführt. Der Massenstrom beträgt 450 kg/h und setzt sich aus 44%wt Eisen(III)chlorid, 0,6%wt Nickelchlorid und 15% freiem Chlorwasserstoff zusammen.

### LEGENDE

### VORRICHTUNGEN

- 1: Hydrolysereaktor
- 2: Vorrichtung zur Filtration
- 3: Vorrichtung zur Lösungsmittelextraktion
- 4: Wärmetauscher
- 5: Kondensor
- 6: Vorrichtung zum Strippen der organischen Phase
- 7: Kristallisationsreaktor
- 8: Vorrichtung zum Filtrieren von Metallchloriden
- 9: Vorrichtung zur Produktion von Chlorwasserstoff
- 10: Vorverdampfer
- 11: Kondenser für Vorverdampfer

### LEITUNGEN

- (1): Zuführleitung zum Hydrolysereaktor
- (2): Abzugleitung vom Hydrolysereaktor
- (3): Ableitung für Regenerat
- (4): Zirkulationsleitung im Hydrolysereaktor
- (5): Zuleitung zur Filtrationsvorrichtung
- (6): Ableitung von Eisenoxid
- (7): Filtratrückführung
- (8): Zuleitung zur Vorrichtung zur Lösungsmittelextraktion
- (9): Rückführung der eisenhaltigen salzsauren Lösung
- (10): Zuführungsleitung zur Vorrichtung zum Strippen der organischen Phase
- (11): Rückführungsleitung für die organische Phase
- (12): Zuführungsleitung für Wasser
- (13): Ableitung der Metallchloride
- (14): Zuleitung von Chlorwasserstoff
- (15): Zuleitung von Regenerat zur Vorrichtung zur Aufkonzentrierung von Chlorwasserstoff
- (16): Rückführung von Wasser
- (17): Zuführleitung zur Vorrichtung zur Filtration von Metallchloriden
- (18): Zuführleitung zum Kristallisationsreaktor
- (19): Zirkulationsleitung für Vorverdampfer
- (20): Zuführleitung für Vorverdampfer
- (21): Abzugsleitung für Vorverdampfer

## Patentansprüche

1. Verfahren zur Aufkonzentrierung und Abtrennung von Metallchloriden in/aus einer eisen(III)chloridhaltigen salzsauren Lösung, wobei Eisen als Hämatit mittels Hydrolyse bei Temperaturen von 150° bis 300°C und bei einem Druck von -0,8 bar bis 20 bar aus der Lösung gefällt und in einer Filtrationsvorrichtung abfiltriert wird, wobei aus zumindest einem Teil des dabei gewonnenen Filtrats nicht hydrolysierbare Metallchloride durch Fällung und Filtration entfernt werden, dieses salzsaures Filtrat in einen Vorverdampfer geleitet wird, wo ein Großteil des in der Lösung enthaltenen Chlorwasserstoffes unter Energiezufuhr ausgetrieben und als Regenerat zurückgewonnen wird, wonach die aufkonzentrierte Lösung aus dem Vorverdampfer in den Hydrolysereaktor gepumpt wird, **dadurch gekennzeichnet, dass** ein Teil des aus der Hydrolyse gewonnenen Regenerates entnommen und in einem Aufkonzentrierungsschritt aus dem Regenerat reiner Chlorwasserstoff mit einer Konzentration von mindestens 70%wt gewonnen wird, der für die Fällung der aufkonzentrierten nicht hydrolysierbaren Metallchloride aus dem salzsauren Filtrat durch Erhöhung der Konzentration an freiem Chlorwasserstoff in der Lösung verwendet wird.

2. Verfahren nach Anspruch 1, **dadurch gekennzeichnet, dass** der chlorwasserstoffhaltige Dampf aus dem Hydrolysereaktor mit überazeotroper Chlorwasserstoffkonzentrationdurch durch einen Aufkonzentrierungsprozess in eine Chlorwasserstofffraktion mit einer Konzentration von Chlorwasserstoff von min. 70%wt und einer weiteren Fraktion mit einer Konzentration von Chlorwasserstoff von min. 10%wt geteilt wird, welche direkt als regenerierte Säure in den Produktionsprozess rückgeführt wird.

3. Verfahren nach Anspruch 1 oder 2, **dadurch gekennzeichnet, dass** die Hydrolyse bei Temperaturen von 160°C bis 200°C stattfindet.

4. Verfahren nach einem der Ansprüche 1 bis 3, **dadurch gekennzeichnet, dass** die Hydrolyse bei einem Druck von -0,5 bis 10 bar stattfindet.

5. Verfahren nach einem der Ansprüche 1 bis 4, **dadurch gekennzeichnet, dass** der in dem Aufkonzentrierungsschritt aus dem Regenerat gewonnene reine Chlorwasserstoff eine Konzentration von mindestens 80%wt aufweist.

## Claims

1. A method for concentrating metal chlorides in and separating same from an iron(III) chloride-containing hydrochloric acid solution, wherein iron is precipitated from the solution as a hematite using hydrolysis at temperatures of from 150° to 300°C and at a pressure of from -0.8 bar to 20 bar and filtered off in a filtration device, wherein non-hydrolysable metal chlorides are removed by precipitating and filtrating from at least part of the obtained filtrate, this hydrochloric acid filtrate is directed into a pre-evaporator where a majority of the hydrogen chloride contained within the solution is stripped with the addition of energy and recovered as a regenerate, whereafter the concentrated solution is pumped from the pre-evaporator into the hydrolysis reactor, **characterized in that** a part of the regenerate recovered from the hydrolysis is removed and in a concentration step pure hydrogen chloride with a concentration of at least 70wt% is recovered from the regenerate which is used for the precipitation of the concentrated non-hydrolysable metal chlorides from the hydrochloric acid filtrate by increasing the concentration of free hydrogen chloride in the solution.

2. The method according to claim 1, **characterized in that** the hydrogen chloride-containing vapor from the hydrolysis reactor with hyperazeotropic hydrogen chloride concentration is separated using a concentration process into a hydrogen chloride fraction with a concentration of at least 70wt% and an additional fraction with a concentration of hydrogen chloride of at least 10wt%, which is directly returned as regenerated acid into the production process.

3. The method according to claim 1 or 2, **characterized in that** the hydrolysis occurs at temperatures of from 160°C to 200°C.

4. The method according to any of claims 1 to 3, **characterized in that** the hydrolysis occurs at a pressure of from -0.5 to 10 bar.

5. The method according to any of claims 1 to 4, **characterized in that** the pure hydrogen chloride recovered from the regenerate in the concentration step has a concentration of at least 80wt% .

## Revendications

1. Procédé pour concentrer des chlorures métalliques dans une solution chlorhydrique contenant du chlorure de fer(III) et pour les en séparer, dans lequel le fer est précité de la solution sous forme d'hématite par hydrolyse à des températures allant de 150° à 300°C et à une pression allant de -0,8 bar à 20 bar et filtré dans un dispositif de filtration, dans lequel les chlorures métalliques non hydrolysables sont éliminés d'au moins une partie du filtrat ainsi obtenu par précipitation et filtration, ce filtrat chlorhydrique est guidé dans un pré-évaporateur, où une majeure partie de l'acide chlorhydrique contenu dans la solution est évacuée grâce à un apport d'énergie et récupérée sous forme de régénérat, à la suite de quoi la solution concentrée est pompée du pré-évaporateur dans le réacteur d'hydrolyse, **caractérisé en ce qu'**une partie du régénérât obtenu de l'hydrolyse est prélevée et, au cours d'une étape de concentration, de l'acide chlorhydrique pur présentant une concentration d'au moins 70 % en poids est obtenu du régénérât et est utilisé pour la précipitation des chlorures métalliques non hydrolysables concentrés du filtrat chlorhydrique à la suite de l'augmentation de la concentration en acide chlorhydrique libre dans la solution.

2. Procédé selon la revendication 1, **caractérisé en ce que** la vapeur contenant de l'acide chlorhydrique et provenant du réacteur d'hydrolyse avec une concentration d'acide chlorhydrique sur-azéotropique à la suite d'un processus de concentration est divisée en une fraction d'acide chlorhydrique présentant une concentration d'acide chlorhydrique de minimum 70 % en poids et en une autre fraction présentant une concentration d'acide chlorhydrique de minimum 10 % en poids, laquelle est renvoyée directement en tant qu'acide régénéré dans le processus de production.

3. Procédé selon la revendication 1 ou 2, **caractérisé en ce que** l'hydrolyse à lieu à des températures allant de 160°C à 200°C.

4. Procédé selon l'une quelconque des revendications 1 à 3, **caractérisé en ce que** l'hydrolyse à lieu à une pression allant de -0,5 à 10 bar.

5. Procédé selon l'une quelconque des revendications 1 à 4, **caractérisé en ce que** l'acide chlorhydrique pur obtenu du régénérât au cours de l'étape de concentration présente une concentration d'au moins 80 % en poids.
